## Europäisches Patentamt

## European Patent Office

(19)

## Office européen des brevets

(11) Veröffentlichungsnummer: **0 010 649**
**B1**

(12) # EUROPÄISCHE PATENTSCHRIFT

(45) Veröffentlichungstag der Patentschrift: **01.02.84**

(51) Int. Cl.³: **B 29 C 27/06**, B 29 C 27/02

(21) Anmeldenummer: **79103859.9**

(22) Anmeldetag: **09.10.79**

(54) **Maschine zum Herstellen von Kunststoffbeuteln mit einer kontinuierlich umlaufenden Schweisswalze.**

(30) Priorität: **24.10.78 DE 2846219**
**24.10.78 DE 2846220**

(43) Veröffentlichungstag der Anmeldung:
**14.05.80 Patentblatt 80/10**

(45) Bekanntmachung des Hinweises auf die Patenterteilung:
**01.02.84 Patentblatt 84/5**

(84) Benannte Vertragsstaaten:
**BE CH FR GB IT NL SE**

(56) Entgegenhaltungen:
**DE - A - 2 123 845**
**DE - A - 2 156 485**
**DE - A - 2 632 853**
**DE - B - 2 159 178**
**DE - B - 2 249 092**
**DE - B - 2 353 886**

(73) Patentinhaber: **Stiegler, Karl Heinz, Werastrasse 24, D-7000 Stuttgart 1 (DE)**

(72) Erfinder: **Schulze, Ehrhart, Koenigsberger Strasse 11, D-7012 Fellbach (DE)**

(74) Vertreter: **Bartels, Hans et al, Patentanwälte Bartels, Held, Wolff Lange Strasse 51, D-7000 Stuttgart 1 (DE)**

## Maschine zum Herstellen von Kunststoffbeuteln mit einer kontinuierlich umlaufenden Schweißwalze

Die Erfindung betrifft eine Maschine zum Herstellen von Kunststoffbeuteln aus einer mindestens zweilagigen, thermoplastischen Kunststoffolie mit einer kontinuierlich umlaufenden Schweißwalze nach dem Oberbegriff des Anspruchs 1. Eine solche Schweißmaschine dient insbesondere zum Herstellen von Kunststoffbeuteln aus einem geschlossenen oder seitlich aufgeschlitzten thermoplastischen Kunststoffschlauch.

Durch die DE-B-1 296 356 ist eine Maschine dieser Art zum Trennschweißen von kontinuierlich transportierten, zweilagigen thermoplastischen Folien bekannt.

Als Schweißwerkzeug ist bei dieser bekannten Maschine ein elektrisch aufheizbarer Draht vorgesehen, der in einer sich entlang einer Mantellinie der Walze erstreckenden spitzwinkligen Nut angeordnet ist, deren Tiefe so bemessen ist, daß der Draht mit seiner Schweißkante über der Oberfläche der Schweißwalze vorsteht.

Beim Schweißen ist es nicht auszuschließen, daß die Vorderkante der thermoplastischen Folie an der Schweißkante anklebt und dadurch aus der für die Folie vorgesehenen Bahn herausgehoben wird. Dies kann zu Störungen beim Weitertransport des nächsten durch die Schweißwalze abgetrennten Folienabschnittes oder Beutels führen. Für diese Störungen sind besonders extrem dünne Folien anfällig.

Auch haben Versuche gezeigt, daß, wenn die Förderfläche der zweiten Fördereinrichtung etwa die Förderebene der ersten Fördereinrichtung fortsetzt, die vordere Folienkante oft und insbesondere bei extrem dünnen Folien im Spalt zwischen der Förderfläche der zweiten Fördereinrichtung und der Gegenwalze hängenbleibt und dadurch der Betrieb gestört wird.

Der Erfindung liegt die Aufgabe zu Grunde, die eingangs genannte Maschine so auszubilden, daß die Folie einwandfrei und sicher einer anschließenden Fördereinrichtung zugeführt wird, auch wenn es sich um eine extrem dünne Folie handelt.

Diese Aufgabe ist bei einer Maschine der zuletzt genannten Art erfindungsgemäß durch die im Patentanspruch 1 genannten Merkmale gelöst. Der dem Schweißwerkzeug nacheilende gummielastische Streifen wird dadurch, daß er gegenüber der Schweißkante des Schweißwerkzeuges radial vorsteht, während des Schweißvorganges durch die Gegenwalze zusammengedrückt, so daß er sich unmittelbar nach dem Schweißvorgang, wenn sich die Schweißkante vom Gegenlager und damit auch von der Vorderkante der der Schweißwalze zugeführten Folie abhebt, ausdehnt und so die Vorderkante der Folie fest an die Gegenwalze andrückt und gleichzeitig nach dem Schweißvorgang von der Schweißkante abzieht. Hierbei können mehrere in Abständen voneinander angeordnete, zusammendrückbare Streifen vorgesehen sein. Vorzugsweise ist jedoch ein Streifen vorgesehen, der sich parallel zum Schweißwerkzeug über dessen ganze Länge erstreckt. Ein besonders vorteilhaftes Material für diesen Streifen ist Schaumstoff, z. B. Schaum- oder Moosgummi oder vorzugsweise ein geschäumter Kunststoff.

Dadurch, daß der gummielastische Streifen an der Oberfläche der Schweißwalze befestigt ist, kann diese Schweißwalzenoberfläche in bekannter Weise gekühlt werden, so daß es möglich ist, unmittelbar hinter dem Schweißwerkzeug trotz der hohen Temperatur dieses Werkzeuges den gummielastischen Streifen anzuordnen, ohne befürchten zu müssen, daß dieser durch die von dem Schweißwerkzeug ausgehende Wärme beschädigt wird. Auch läßt sich ein solcher gummielastischer Streifen sehr leicht auswechseln.

Überraschend hat es sich gezeigt, daß, wenn die zweite Förderfläche gegenüber der ersten Förderfläche nach unten um einen Abstand versetzt angeordnet ist, die Vorderkante auch extrem dünner Folie noch ein Stück nachdem sich der gummielastische Streifen von ihr abgehoben hat, an der Oberfläche der Gegenwalze anliegt und sich erst in einem Abstand von dem Schweißspalt leicht von der Oberfläche der Gegenwalze löst und dadurch auch bei sehr großen Produktionsgeschwindigkeiten einwandfrei in die zweite Fördereinrichtung überführt wird. Diese überraschende Erscheinung kann durch die Luftströmung im Schließspalt verursacht sein, die bei den verhältnismäßig großen Drehzahlen des Schweißwerkzeuges und insbesondere durch Blaseinrichtungen gemäß Anspruch 7 entsteht und beim Verlassen des Schweißspaltes divigiert und dadurch die Folienvorderkante an die Gegenwalze andrückt und erst in einem Abstand vom Schweißspalt sich parallel zur Vorschubrichtung ausrichtet und so die Folienvorderkante von der Gegenwalze freigibt.

Durch den gummielastischen Streifen werden Luftströme der genannten Blaseinrichtungen im Augenblick des Schweißens unterbrochen, so daß während des Schweißens die Schweißnaht nicht der kühlenden Wirkung dieser Luftströme ausgesetzt ist, wodurch die Herstellung von einwandfreien Schweißnähten gefördert wird.

Eine besonders einwandfreie Weiterleitung der Folienvorderkante ergibt sich dann, wenn der Abstand, um den die zweite Förderfläche nach unten versetzt ist, etwa dem Radius der Gegenwalze entspricht.

Die Erfindung ist in der folgenden Beschreibung eines in der Zeichnung dargestellten Ausführungsbeispieles im einzelnen erläutert.

Es zeigen

Fig. 1 eine schematisch stark vereinfachte Seitenansicht des Schweißspaltes und der ihr benachbarten Fördereinrichtung für die dem Schweißspalt zugeführte Folie und die von dieser abgeführten Folienabschnitte;

Fig. 2 einen vergrößerten Ausschnitt aus Fig. 1.

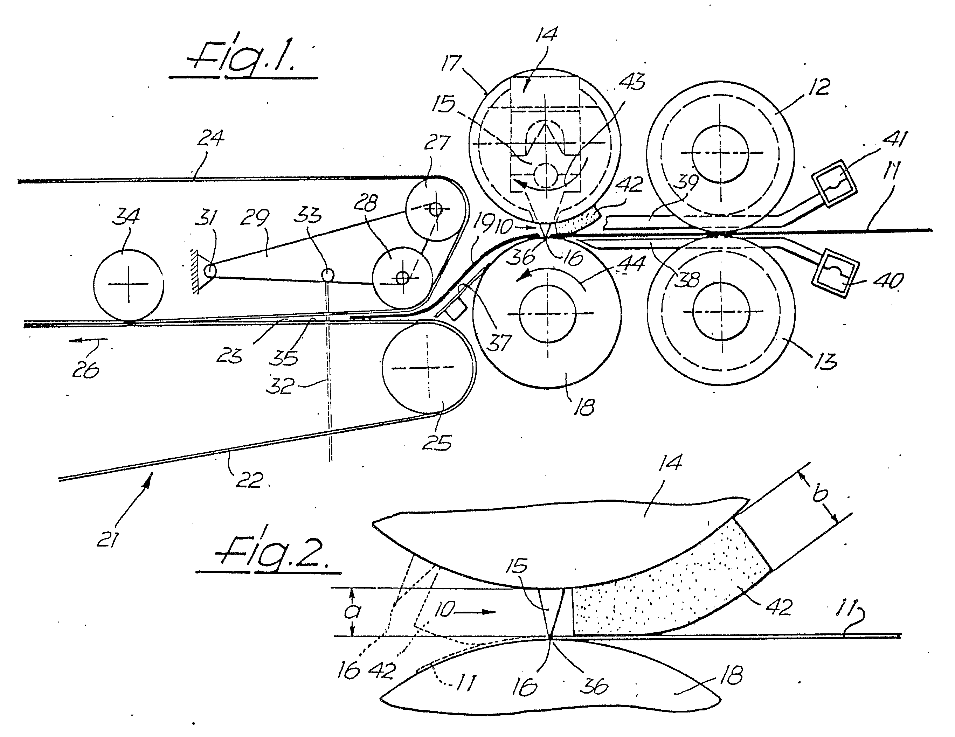

Die in der Zeichnung nur teilweise schematisch dargestellte Maschine ist zum Herstellen von Kunststoffbeuteln aus einer längsgeschlitzten schlauchförmigen, thermoplastischen Folie 11 vorgesehen, die von Einzugswalzen 12 und 13 einem Schweißspalt 10 zwischen einer Schweißwalze 14 und einer Gegenwalze 18 zugeführt wird. Die Schweißwalze 14 weist ein Schweißwerkzeug 15 auf, das mit seiner Schweißkante 16 um einen Betrag a über der Oberfläche 17 der Schweißwalze 14 vorsteht. Diese Schweißkante 16 arbeitet mit der Gegenwalze 18 so zusammen, daß, wenn sich die Folie 11 in dem Schweißspalt 10 befindet, die Schweißkante 16 an die Folie 11 gedrückt und dadurch die Schweißung, z. B. eine Trennschweißung, durchgeführt wird, bei der ein Beutel 19 von der Folie 11 abgetrennt und dabei gleichzeitig eine Seitennaht am Beutel 19 und eine Naht an der Vorderkante der schlauchförmigen Folie 11 gebildet werden, die beim nächsten Beutel eine Seitennaht bildet.

Die Schweißwalze 14 und die Gegenwalze 18 werden über ein Vorschaltgetriebe mit ungleichförmiger Geschwindigkeit angetrieben.

Dem Schweißspalt 10 ist eine als Ganzes mit 21 bezeichnete Fördereinrichtung nachgeordnet, die die im Schweißspalt abgetrennten Beutel 19 einer Stapelvorrichtung zuführt. Diese Fördereinrichtung weist mehrere nebeneinander angeordnete untere Förderbänder 22 und mehrere obere Förderbänder 24 auf, deren untere Trume mit den oberen Trumen der unteren Förderbänder 22 Förderspalte 23 bilden. Die unteren Förderbänder 22 sind um eine im Maschinengestell ortsfest aber drehbar gelagerte vordere Umlenkwalze 25 umgelenkt. Am anderen Ende sind die Förderbänder 22 um in der Zeichnung nicht dargestellte Umlenkwalzen umgelenkt, von denen eine in bekannter Weise so angetrieben ist, daß die oberen Trume der Förderbänder 22 sich in der Förderrichtung 26 kontinuierlich mit einer Geschwindigkeit bewegen, die etwas größer ist als die Fördergeschwindigkeit der Einzugswalzen 12 und 13. Die oberen Förderbänder 24 laufen um zwei vordere Umlenkwalzen 27 und 28 um, die an einem dreieckigen Hebel 29 drehbar gelagert sind. Der dreieckige Hebel 29 ist wiederum um eine gestellfeste waagerechte Achse 31 schwenkbar gelagert und wird von einem in der Zeichnung nicht dargestellten Antrieb über eine Stange 32 auf und ab bewegt, die durch ein Gelenk 33 am Hebel 29 angelenkt ist. In einem in der Förderrichtung 26 gemessenen Abstand hinter der unteren Umlenkwalze 28 befindet sich eine fest angeordnete Walze 34, die die unteren Trume der Förderbänder 24 immer an die oberen Trume der Förderbänder 22 drückt. Durch die Auf- und Abwärtsbewegung des Hebels 29 werden die vor der Walze 43 liegenden Teile der unteren Trume der Förderbänder 24 auf und ab bewegt, so daß sich ein dauernd öffnender und schließender Einlaufspalt des Förderspaltes 23 bildet. Diese Auf- und Abwärtsbewegung des Hebels 29 ist so mit der Umlaufbewegung des Schweißwerkzeuges 15 gekoppelt, daß jedesmal dann, wenn durch das Schweißwerkzeug 15 eine Schweißung abgeschlossen ist, sich der Einlaufspalt schließt und der abgetrennte Beutel 19, dessen voreilender Rand in den geöffneten Einlaufspalt eingelaufen ist, von der Fördereinrichtung 21 erfaßt wird.

Die Umlenkwalze 25 ist so angeordnet, daß die durch die oberen Trume der Förderbänder 22 gebildete Förderfläche 35 gegenüber der den Schweißspalt 10 begrenzenden Mantellinie 36 der Gegenwalze 18 etwa um den Radius der Gegenwalze 18 nach unten versetzt ist. Der zwischen der Gegenwalze 18 und der Förderfläche 35 gebildete spitzwinklige Winkelraum ist von einer durch ein Leitblech gebildeten Leitfläche 37 überbrückt.

Zur Führung der Folie 11 in den Schweißspalt 10 sind Leitrechen 38 und 39 vorgesehen, die in bekannter Weise hohl ausgeführt sind und deren Hohlräume mit Blasluftrohren 40 bzw. 41 verbunden sind, durch die ein in den Schweißspalt 10 gerichteter Luftstrom erzeugt wird, durch den die Folie einwandfrei dem Schweißspalt 10 zugeführt wird. Zur elektrostatischen Entladung der zugeführten Folie 11 besteht vorzugsweise die Einzugswalze 12 aus einem elektrisch leitenden Material, z. B. aus Stahl, und ist geerdet.

An der Schweißwalze 14 ist unmittelbar neben dem Schweißwerkzeug 15 ein elastisch zusammendrückbarer Streifen 42 befestigt, der sich parallel zum Schweißwerkzeug 15 erstreckt und um einen Betrag b über der Oberfläche 17 der Schweißwalze 14 vorsteht, der größer ist als der Betrag a, um den die Schweißkante 16 des Schweißwerkzeuges 15 über der Schweißwalzenoberfläche 17 vorsteht, so daß der Streifen 42 gegenüber der Schweißkante 16 radial vorsteht. Dieser Streifen 42 besteht aus einem geschäumten, gummielastischen Kunststoff.

Wenn während des Betriebes die Schweißwalze 14 und die Gegenwalze 18 in Richtung der Pfeile 43 bzw. 44 umlaufen, berührt die Schweißkante 16 die mit gleichbleibender Geschwindigkeit zugeführte Folie 11 und drückt diese an die Gegenwalze 18 an. Das Schweißwerkzeug ist dabei durch eine hier nicht näher dargestellte elektrische Heizung auf eine Temperatur aufgeheizt, bei der eine Trennschweißung der Folie 11 erfolgt. Der unmittelbar der Schweißstelle nachfolgende Rand der Folie 11 wird etwa gleichzeitig mit der Berührung der Schweißkante 16 von dem Streifen 42 berührt, der im Schweißspalt 10 zwischen den beiden Walzen 14, 18 zusammengedrückt wird. Sobald sich beim Weiterdrehen nach vollzogener Schweißung die Schweißkante 16 von der Folie 11 abhebt, wird diese noch für die Dauer des Durchlaufs des Streifens 42 durch den Schweißspalt an die Gegenwalze 18 gedrückt und dadurch längs der Oberfläche der Gegenwalze Förderrichtung (26) bewegenden Trume aneinanderliegen und einen Förderspalt (35) begrenzen, der einen Einlaufspalt aufweist, innerhalb dessen das Einlaufende des Trumes des oberen Förderbandes (24) in Abstimmung mit der Bewegung des Schweißwerkzeuges (15) auf- und abbewegbar ist.

## Claims

1. Machine for the manufacture of plastic bags (19) from an at least 2-layered thermoplastic foil (11), comprising a continuously rotating welding roll (14) having a welding tool (15) on which the welding edge (16) projects from the surface of the welding roll (14) by an amount (a) and co-operating with an endless, closed surface of a counter roll (18) to form a welding gap (10), through which the thermoplastic foil, lying loosely on the surface of the counter roll (18), is passed continuously in one direction of transport for the formation of welding seams and simultaneous separation of plastic bags (19), and comprising at least two conveying devices (12, 13 and 21), one of which conveys the thermoplastic foil (11) disposed at one side of the welding gap (10) to that gap in a first conveying surface and the second of which carries the plastic bags (19) which have been separated in the welding gap and are disposed at the other side of the gap (10) away from that gap in a second conveying surface, both these devices acting on both sides of the foil (11) and of the plastic bags (19), respectively, characterised in that at least one rubbery elastic strip (42) is attached to the surface of the welding roll (14) to trail behind the welding edge (16) in the direction of rotation of the welding tool (15), the said strip projecting radially from the surface (17) of the welding roll (14) by a larger amount (b) than the welding edge (16) when the strip (42) is not under compression, and in that the second conveying surface (35) is shifted by some distance from the first conveying surface in a direction towards the axis of rotation of the counter roll.

2. Machine according to Claim 1, characterised in that the strip (42) extends parallel to the welding tool (15) over the whole length of the welding tool.

3. Machine according to Claim 1 or Claim 2, characterised in that the strip (42) consists of a foam.

4. Machine according to one of the Claims 1 to 3, characterised in that the welding tool (15) may be driven at a non-uniform circumferential velocity so that, during the welding process, the circumferential velocity of the welding edge (16) is equal to the circumferential velocity of the counter roll (18) and equal to the constant velocity of feed of the foil (11) and in that the width of the strip (42) is such that this correspondence of velocity is substantially maintained while the strip (42) is in contact.

5. Machine according to one of the Claims 1 to 4, characterised in that the distance by which the second conveying surface (35) is shifted downwards is approximately equal to the radius of the counter roll (18).

6. Machine according to one of the Claims 1 to 5, characterised in that a guide surface (37) is disposed substantially tangentially near to, or in contact with, the circumferential surface of the counter roll (18) so as to provide a transition from the surface of the counter roll (18) to the second conveying surface (35).

7. Machine according to one of the Claims 1 to 6, characterised in that a blast device (38, 40; 39, 41) is provided, producing an air stream blowing in the direction of transport into the welding gap (10) on both sides of the foil (11).

8. Machine according to one of the Claims 1 to 7, characterised in that the second conveying device (21) comprises at least 2 conveyor belts (22, 24) moving in opposite senses and arranged one above the other, those strands which move in the direction of transport (26) lying in contact with each other and bounding a conveyor gap (35) having an inlet gap within which the inlet end of the strand of the upper conveyor belt (24) is capable of moving up and down in accordance with the movement of the welding tool (15).

## Revendications

1. Machine pour fabriquer des sacs en matière plastique (19) à partir d'une feuille thermoplastique (11) comprenant au moins deux couches, comportant un rouleau de soudage (14) en rotation continue, qui possède un outil de soudage (15) dont l'arête de soudage (16) fait saillie d'une hauteur (a) au-dessus de la surface du rouleau de soudage (14) et qui forme avec une surface fermée sans fin d'un rouleau conjugué (18) une fente de soudage (10) à travers laquelle la feuille thermoplastique est entraînée en continu suivant une direction d'entraînement en reposant librement sur la surface du rouleau conjugué (18), pour la fabrication de cordons de soudure et pour la séparation simultanée de sacs en matière plastique (19), et comportant au moins deux dispositifs d'entraînement (12, 13 et 21), dont l'un envoie la feuille thermoplastique (11) d'un côté de la fente de soudage (10) sur une première surface d'entraînement jusqu'à cette fente et dont le second écarte le sac en matière plastique (19) séparé dans la fente de soudage (10), de l'autre côté de cette fente, sur une seconde surface d'entraînement à partir de cette fente, les deux dispositifs d'entraînement saisissant des deux côtés la feuille (11) ou les sacs en matière plastique (19), caractérisée en ce qu'en arrière de l'arête de soudage (16) de l'outil de soudage (15) suivant la direction de rotation de ce dernier, se trouve fixée sur la surface du rouleau de soudage (14) au moins une bande de gomme élastique (42) qui, à l'état détendu, fait saillie radialement au-dessus de la surface (17) du rouleau de soudage (14), sur une hauteur (b) plus importante que ne le fait l'arête de soudage (16), et que la seconde surface d'entraînement (35) est disposée en étant décalée d'une certaine distance en direction de l'axe de rotation du rouleau conjugué, par rapport à la première surface d'entraînement.

2. Machine selon la revendication 1, caractérisée en que la bande (42) s'étend parallèlement à l'outil de soudage (15) sur toute la longueur de ce dernier.

3. Machine selon la revendication 1 ou 2, caractérisée en ce que la bande (42) est constituée en un matériau en mousse.

4. Machine selon l'une des revendications 1 à 3, caractérisée en ce que l'outil de soudage (15) peut être entraîné avec une vitesse périphérique non uniforme de telle sorte que pendant l'opération de soudage, la vitesse périphérique de l'arête de soudage (16) est égale à la vitesse périphérique du rouleau conjugué (18) et est égale à la vitesse d'avance constante de la feuille (11) et que la largeur de la bande (42) est dimensionnée de telle manière que pendant le contact de la bande (42), cette égalité de vitesse reste sensiblement conservée.

5. Machine selon l'une des revendications 1 à 4, caractérisée en ce que la hauteur, dont la seconde surface d'entraînement (35) est décalée vers le bas, correspond approximativement au rayon du rouleau conjuqué (18).

6. Machine selon l'une des revendications 1 à 5, caractérisée en ce qu'il est prévu comme jonction de la surface du rouleau conjugué (18) à la seconde surface d'entraînement (35), une surface de guidage (37) qui se raccorde essentiellement tangentiellement à la surface périphérique du rouleau conjugué (18).

7. Machine selon l'une des revendications 1 à 6, caractérisée en ce qu'il est prévu un dispositif de soufflage (38, 40, 39, 41) qui produit un courant d'air dirigé suivant la direction d'entraînement des deux côtés de la feuille (11) dans la fente de soudage (10).

8. Machine selon l'une des revendications 1 à 7, caractérisée en ce que le second dispositif d'entraînement (21) comporte au moins deux bandes convoyeuses (22, 24) tournant en sens inverse et superposées, dont les brins se déplaçant suivant la direction d'entraînement (26) sont disposés l'un contre l'autre et délimitent une fente d'entraînement (35) qui possède une fente d'introduction à l'intérieur de laquelle l'extrémité d'introduction du brin de la bande convoyeuse supérieure (24) est déplaçable selon un mouvement de va-et-vient vertical en synchronisme avec le déplacement de l'outil de soudage (15).

_Fig.1._

_Fig.2._